# EUROPÄISCHE PATENTANMELDUNG

(11) **EP 1 148 076 A1**
(43) Veröffentlichungstag der Anmeldung: **24.10.2001**
(21) Anmeldenummer: 01108583.4
(22) Anmeldetag: 05.04.2001
(51) Int. Cl.: C08G 65/26, C10M 173/00

(54) **Wasserlösliche Polyalkylenglykolöle mit hohem Viskositätsindex und niedriger Aeorosoltoxizität**

(30) Priorität: 17.04.2000 DE 10019178; 27.04.2000 DE 10020669
(71) Anmelder: Clariant GmbH, 65929 Frankfurt am Main (DE)
(72) Erfinder: Pöllmann, Klaus, Dr., 84489 Burghausen (DE); Kupfer, Rainer, Dr., 65795 Hattersheim (DE)
(74) Vertreter: Mikulecky, Klaus

(57) **Zusammenfassung**

Gegenstand der Erfindung sind Ethylenoxid-/Propylenoxid-Copolymere, welche durch Copolymerisation von Ethylenoxid und Propylenoxid mit einem Alkohol mit 4 bis 12 Kohlenstoffatomen und 4 bis 12 OH-Gruppen erhältlich sind, mit einem Ethylenoxid/Propylenoxid-Gewichtsverhältnis im Copolymer von 40:60 bis 60:40 und einem Molekulargewicht zwischen 2000 und 10000 g/mol, sowie deren Verwendung in Schmiermittelformulierungen, Formulierungen zur Faserpräparation und Metallbearbeitungsflüssigkeiten.

## Beschreibung

Die vorliegende Erfindung betrifft Polyalkylenglykol-Copolymere, die als Basisöle für wasserlösliche Schmiermittelformulierungen eingesetzt werden, sowie deren Verwendung in offenen Systemen, die zur Aerosolbildung neigen.

Copolymere mit Ethylenoxid und Propylenoxid als Ausgangsmonomere werden seit vielen Jahren als Basisöle zur Herstellung von Hochleistungsschmierstoffen eingesetzt, deren wesentliche Anwendungsgebiete die Herstellung von Metallbearbeitungsflüssigkeiten und Schmiermittel bei der Faserbearbeitung sind. Synthetisch ist diese Produktgruppe durch anionische Polymerisation von Ethylenoxid zusammen mit Propylenoxid ausgehend von einem mono- oder difunktionellen Alkoholat zugänglich.

Die wesentlichen Vorteile dieser Polyglykol-Copolymere als Schmierstoffe sind ihr hoher Viskositätsindex (d.h. geringe Temperaturabhängigkeit der Viskosität), niedrige Reibwerte bereits ohne Zusatz von Reib-Verschleißschutz-Additiven, gezielte Einstellung des Grads der Wasserlöslichkeit des Copolymeren über die Auswahl des Ethylenoxid/Propylenoxidverhältnisses (charakterisiert durch hohe Trübungspunkte) sowie sehr niedrige Pourpoints. Besonders günstig erwiesen sich dabei lineare Copolymere mit einem Gewichtsverhältnis von Ethylenoxid- zu Propylenoxid-Monomeren im Bereich von 40:60 bis 60:40. Diese Copolymere weisen zum einen sehr niedrige Pourpoints von unter -30°C, gute Wasserlöslichkeit (Trübungspunkte größer 50°C) sowie sehr hohe Viskositätsindizes (größer 250) auf.

In jüngerer Zeit haben jedoch toxikologische Untersuchungen an Aerosolen dieser Substanzklasse gezeigt, dass diese Produkte ein großes gesundheitliches Gefährdungspotential aufweisen (Lit.: ECETOC, European Centre for Ecotoxicology and Toxicology of Chemicals, Technical Report No. 55, March 1997). So zeigten z.B. Monobutoxyethylenoxid-Propylenoxid-Copolymere, die Ethylenoxid und Propylenoxid in einem Gewichtsverhältnis von 50:50 enthielten, bei einem Molekulargewicht von ca. 4000 g/mol eine sehr hohe Aerosoltoxizität, charakterisiert durch einen niedrigen LC₅₀-Wert von nur 106 mg/m³. Auch reine Ethylenoxid-Propylenoxid-Copolymere, die Ethylenoxid und Propylenoxid in einem Gewichtsverhältnis von 50:50 enthielten und ein Molekulargewicht von 4000 g/mol aufwiesen, zeigten LC₅₀-Werte von ca. 300 mg/m³ ( D.B. Warheit, Inhalation Toxicol. (1995), 7 (3) 377-92). Diese hohe Toxizität der Aerosole nötigt Verarbeiter und Verwender dieser linearen Copolymere dazu, aufwendige technische Maßnahmen wie z.B. Kapselung der Anlagen zum Schutz des Personals vor Aerosolen zu treffen.

Aufgabe vorliegender Erfindung war es demnach, Basisöle für Schmierstoffe herzustellen, die genauso gut wasserlöslich sind, ähnlich hohe Viskositätsindizes und niedrige Reibwerte wie die aus mono- oder difunktionellen Alkoholaten zugänglichen Ethylenoxid-Propylenoxid-Copolymere, sowie sehr niedrige Pourpoints aufweisen. Diese Basisöle sollten jedoch kein toxikologische Potential bei Aerosolbildung haben, und damit aufwendige Schutzmaßnahmen bei der Handhabung überflüssig machen.

Überraschend wurde gefunden, dass polyol-initiierte Ethylenoxid-/Propylenoxid-Copolymere mit einer zentralen Verzweigung sowie einem Ethylenoxid/Propylenoxid-Gewichtsverhältnis von 40:60 bis 60:40 ausgehend von einem Alkohol mit mindestens 4 OH-Gruppen hervorragende Eigenschaften hinsichtlich Pourpoint, Wasserlöslichkeit und Viskositätsindex aufweisen, und dabei gleichzeitig nicht toxisch bei Aerosolexposition wirken. Dies ermöglicht es vor allem bei deren Verwendung in der Formulierung von wässrigen Metallbearbeitungsflüssigkeiten aufwendige technische Maßnahmen zur Kapselung der Anlagen zum Schutz vor Exposition zu vermeiden.

Gegenstand der Erfindung sind daher Ethylenoxid-/Propylenoxid-Copolymere, welche durch Copolymerisation von Ethylenoxid und Propylenoxid mit einem Alkohol mit 4 bis 12 Kohlenstoffatomen und 4 bis 12 OH-Gruppen erhältlich sind, mit einem Ethylenoxld/Propylenoxid-Gewichtsverhältnis im Copolymer von 40:60 bis 60:40 und einem Molekulargewicht zwischen 2000 und 10000 g/mol.

Ein weiterer Gegenstand der Erfindung ist die Verwendung der erfindungsgemäßen Copolymere für Schmiermittelformulierungen, Formulierungen zur Faserpräparation und Metallbearbeitungsflüssigkeiten, vorzugsweise in offenen Systemen. Unter offenen Systemen werden hier Vorrichtungen verstanden, in denen Schmiermittelformulierungen, Formulierungen zur Faserpräparation und Metallbearbeitungsflüssigkeiten verwendet werden, und in denen Aerosole entstehen, die aus diesen Vorrichtungen nach außen dringen können.

Ein weiterer Gegenstand der Erfindung sind Schmiermittelformulierungen, Formulierungen zur Faserpräparation und Metallbearbeitungsflüssigkeiten, die die erfindungsgemäßen Copolymere enthalten.

Die Verwendung von Glykolen in Schmiermitteln und Glykole enthaltende Schmiermittelformulierungen sind in W.J. Barz, Tribologie und Schmierungstechnik, Heft 5 (1987), Seiten 262 bis 269 beschrieben. Die Verwendung von Glykolen in Faserpräparationsmitteln und Glykole enthaltende Faserpräparationsmittel sind in P. Ehrler, Textilveredelung, Heft 16 (1981), Seiten 403 bis 414 und in R.S. Jinkins, K.K. Leonas, 1994 Student Paper Competition, Heft 12 (1994), Seiten 25 bis 29 beschrieben. Die Verwendung von Glykolen in Metallbearbeitungsflüssigkeiten und Glykole enthaltende Metallbearbeitungsflüssigkeiten sind in W.L. Brown, Lubrication Engineering, 1988, Seiten 168 bis 171 beschrieben. Die Offenbarung dieser Dokumente wird hiermit einbezogen.

Bevorzugte erfindungsgemäße Copolymere haben eine nach DIN 51562 bestimmte Viskosität bei 50°C zwischen 50 und 1000 mm²/s. Ebenfalls bevorzugt ist ein nach ASTM D2270-74 bestimmter Viskositätsindex von größer 200 bis 350. In einer weiteren bevorzugten Ausführungsform haben die Copolymere einen nach ISO 3016 bestimmten Pourpoint von unter -30°C. Eine OH-Zahl von 20 bis 100 mg KOH/g ist bevorzugt. Es ist ein Vorteil der Erfindung, dass, bedingt durch die Verwendung eines Alkohols mit mehr als 4 Hydroxygruppen als Initiator der Polymerisation, die für eine bestimmte Viskosität benötigte OH-Zahl wesentlich niedriger liegt als bei linearen Copolymere von Ethylenoxid und Propylenoxid.

Das Verhältnis zwischen Ethylenoxid und Propylenoxid ist, je nach dem mehrwertigen Alkohol, vorzugsweise so gewählt, dass die erfindungsgemäßen Copolymere als 1-%-ige Lösung in Wasser einen Trübungspunkt zwischen 40 und 60°C aufweisen.

Die erfindungsgemäßen Copolymere werden durch die Reaktion von Ethylenoxid und Propylenoxid mit einem mehrwertigen Alkohol hergestellt. Die Alkohole entsprechen der Formel

R-(OH)_{y}

mit R = C₄ - C₁₂-Alkyl, welches auch verzweigt sein kann, und y = 4 bis 12. Bei der Reaktion von Ethylenoxid und Propylenoxid mit dem mehrwertigen Alkohol können eine oder mehrere der OH-Gruppen reagieren.

Bevorzugte Alkohole zur Herstellung der erfindungsgemäßen Copolymere sind Pentaerythrit, Sorbitol, Dipentaerythrit, Diglycerin, Triglycerin und Ditrimethylolpropan.

Die entsprechenden mehrwertigen Alkohole werden dazu in einem Druckreaktor durch Erhitzen aufgeschmolzen oder in einem inerten Lösemittel gelöst und nach Zugabe eines Katalysators zur Bildung der entsprechenden Alkoholate (üblicherweise Kaliumhydroxid oder Kaliummethylat) unter Druck mit einer Mischung aus Ethylenoxid und Propylenoxid im gewünschten molaren Verhältnis unter Rühren in einer anionischen Polymerisation umgesetzt. Das resultierende Polymer wird durch Zugabe von Säure neutralisiert. Die gewünschte Viskosität wird durch das resultierende Molekulargewicht bestimmt, und ergibt sich durch das Verhältnis von mehrwertigen Alkohol und Ethylenoxid/Propylenoxidgemisch.

Typische Formulierungen für Schmiermittel enthalten neben dem Polyalkylenglykol als Hauptkomponente (Gehalt > 94%) zusätzlich Verschleißschutzadditive, EP (Extreme pressure) Additive, Antioxidantien, Korrosionsschutzadditive sowie Entschäumer (siehe z. B EP-A-0 402 009).

Die erfindungsgemäßen Copolymere zeigen eine sehr geringe, nach D.B. Warheit, Inhalation Toxicol. (1995), 7 (3) 377-92 bestimmte Aerosoltoxizität von im allgemeinen über 1000, insbesondere über 2000, speziell über 3000 mg/m³. Sie sind daher besonders gut zur Verwendung in solchen Verfahren geeignet, bei denen eine feine Verstäubung der Copolymere auftritt.

Die Erfindung soll nun anhand von einigen Beispielen näher erläutert werden.

### Beispiel 1: Mit Pentaerythrit initiiertes Ethylenoxid-Propylenoxid Copolymer, MW 4000 g/mol

0,1 mol Pentaerythrit wird mit 0,3 mol Natriummethanolat in einem inerten Lösemittel (Monoglyme) in einem Laborautoklaven zum Alkoholat umgesetzt. Methanol wird im Vakuum abdestilliert. Anschließend wird ein Gemisch aus 4 mol Ethylenoxid und 4 mol Propylenoxid zugegeben und für 10 Stunden bei ca. 140°C unter Druck polymerisiert . Das resultierende Polymer wird mit Isononansäure neutralisiert. Das Monoglyme wird im Vakuum verdampft. Die Hydroxylzahl wird bestimmt durch Umsetzen des Polymers mit einem Überschuss an Acetanhydrid und Titration des überschüssigen, nicht mit den Polymer-OH-Gruppen abreagierten Acetanhydrid mit Kaliumhydroxidlösung. Die Hydroxyzahl beträgt 56 mg KOH/g Gemäß Hydroxylzahl hat das Polymer ein Molekulargewicht von 4000 g/mol. Die kinematische Viskosität bestimmt nach der Methode DIN 51562 liegt bei 50°C bei 300 mm²/s, der Viskositätsindex bestimmt nach der Methode ASTM D 2270-74 liegt bei 243, der Pourpoint bestimmt nach der Methode ISO 3016 liegt bei -37°C. Der Trübungspunkt der 1 %-igen Lösung in Wasser, das heißt die Temperatur, bei der die wässrige Lösung nicht mehr klar ist, liegt bei 48°C.

Das Copolymer zeigt bei der Untersuchung der Aerosoltoxizität wie in D.B. Warheit, Inhalation Toxicol. (1995), 7 (3) 377-92 beschrieben an Ratten einen LC ₅₀-Wert von größer 5100 mg/m³. Das Copolymer ist somit hervorragend geeignet zur Formulierung von Schmiermitteln und Metallbearbeitungsflüssigkeiten, die in offenen Systemen zur Anwendung kommen.

### Beispiel 2: Mit Pentaerythrit initiiertes Ethylenoxid-Propylenoxid Copolymer, MW 7500 g/mol

0,1 mol Pentaerythrit wird mit 0,3 mol Natriummethanolat in einem inerten Lösemittel (Monoglyme) in einem Laborautoklaven zum Alkoholat umgesetzt. Methanol wird im Vakuum abdestilliert. Anschließend wird ein Gemisch aus 8 mol Ethylenoxid und 7 mol Propylenoxid zugegeben und für 10 Stunden bei ca. 140°C unter Druck polymerisiert . Das resultierende Polymer wird mit Milchsäure neutralisiert. Das Monoglyme wird im Vakuum verdampft. Die Kennwerte werden wie in Beispiel 1 beschrieben ermittelt. Die Hydroxyzahl beträgt 30 mg KOH/g.
Gemäß Hydroxyzahl hat es ein Molekulargewicht von 7500 g/mol. Die Viskosität liegt bei 50°C bei 720 mm²/s, der Viskositätsindex bei 280, der Pourpoint bei -31°C, der Trübungspunkt als 1 %-ige Lösung in Wasser bei 55°C.

Das Copolymer zeigt bei der Untersuchung der Aerosoltoxizität an Ratten wie in Beispiel 1 beschrieben einen LC ₅₀-Wert von größer 5000 mg/m³. Das Copolymer ist somit hervorragend geeignet zur Formulierung von Schmiermitteln, und Metallbearbeitungsflüssigkeiten, die in offenen Systemen zur Anwendung kommen.

### Beispiel 3: Getriebeschmiermittel auf Basis des Polyglykols aus Beispiel 2

In 96,45 Gew.-% des Polyglykols aus Beispiel 2 werden bei 80°C 0,5 Gew.-% Monoisotridecylphosphat, 0,05 Gew.-% Benzotriazol, 0,5 Gew.-% Butylhydroxyanisol, 0,5 Gew.-% 4,4'-Methylen-bis-2,6-ditert-butylphenol und 2 Gew.-% Phenylalphanaphthylamin eingerührt. Das resultierende Öl kann hervorragend als hochviskoses Getriebeöl eingesetzt werden.

### Beispiel 4: Faserschmiermittel auf Basis des Polyglykols aus Beispiel 2

In 93 Gew.-% des Polyglykols aus Beispiel 2 werden bei 80°C 5 Gew.-% Genapol LA 070 (Fettalkoholethoxylat) sowie 0,5 Gew.-% Butylhydroxyanisol und 1,5 Gew.-% Lauryldimethylaminoxid eingerührt. Das resultierende Öl kann hervorragend ohne weitere Zusätze als ausgezeichnetes Schmiermittel bei der Faserherstellung verwendet werden.

### Vergleichsbeispiel: Methanol initiiertes Ethylenoxid-Propylenoxid Copolymer

0,1 mol Natriummethanolat gelöst in Methanol wird in einem Laborautoklaven zum Alkoholat umgesetzt. Methanol wird im Vakuum abdestilliert. Anschließend wird ein Gemisch aus 15 mol Ethylenoxid und 15 mol Propylenoxid zugegeben und für 10 Stunden bei ca. 140°C unter Druck polymerisiert . Das resultierende Polymer wird mit Milchsäure neutralisiert. Die Kennwerte werden wie in Beispiel 1 beschrieben ermittelt. Die Hydroxyzahl beträgt 11 mg/KOH g. Gemäß Hydroxyzahl hat es ein Molekulargewicht von ca. 5000 g/mol. Die Viskosität liegt bei 50°C bei 690 mm²/s, der Viskositätsindex bei 280, der Pourpoint bei -35°C, der Trübungspunkt als 1 %-ige Lösung in Wasser bei 49°C.

Das Copolymer zeigt bei der Untersuchung der Aerosoltoxizität an Ratten jedoch einen LC ₅₀-Wert von 390 mg/m³. Das lineare Copolymer ist somit als giftig beim Einatmen zu bezeichnen und für Formulierung von Schmiermitteln und Metallbearbeitungsflüssigkeiten, die in offenen Systemen zur Anwendung kommen nicht geeignet.

## Patentansprüche

1. Ethylenoxid-/Propylenoxid-Copolymere, welche durch Copolymerisation von Ethylenoxid und Propylenoxid mit einem Initiator-Alkohol mit 4 bis 12 Kohlenstoffatomen und 4 bis 12 OH-Gruppen erhältlich sind, mit einem Ethylenoxid/Propylenoxid-Gewichtsverhältnis im Copolymer von 40:60 bis 60:40, und einem Molekulargewicht zwischen 2000 und 10000 g/mol.

2. Copolymere nach Anspruch 1, **dadurch gekennzeichnet, dass** ihre Viskosität bei 50°C zwischen 50 und 1000 mm²/s liegt.

3. Copolymere nach Anspruch 1 und/oder 2, **dadurch gekennzeichnet, dass** sie einen Pourpoint von unter-30°C aufweisen.

4. Copolymere nach einem oder mehreren der Ansprüche 1 bis 3, **dadurch gekennzeichnet, dass** ihr Trübungspunkt in Wasser als 1-%-ige Lösung zwischen 40 und 60°C liegt.

5. Copolymere nach einem oder mehreren der Ansprüche 1 bis 4, **dadurch gekennzeichnet, dass** als initiierender Alkohol Pentaerythrit, Sorbitol, Dipentaerythrit, Diglycerin, Triglycerin oder Ditrimethylolpropan verwendet wird.

6. Copolymere nach einem oder mehreren der Ansprüche 1 bis 5, **dadurch gekennzeichnet, dass** sie einen Viskositätsindex von mehr als 200 aufweisen.

7. Copolymere nach einem oder mehreren der Ansprüche 1 bis 6, **dadurch gekennzeichnet, dass** ihre Hydroxyzahl zwischen 20 und 100 mg KOH/g liegt.

8. Verwendung der Copolymere nach einem oder mehreren der Ansprüche 1 bis 7 in Schmiermittelformulierungen, Formulierungen zur Faserpräparation und Metallbearbeitungsflüssigkeiten.

9. Schmiermittelformulierungen, Formulierungen zur Faserpräparation und Metallbearbeitungsflüssigkeiten, enthaltend Copolymere nach einem oder mehreren der Ansprüche 1 bis 7.
